Europäisches Patentamt

(19) European Patent Office

Office européen des brevets

(11) Publication number: 0 152 251
A2

(12) **EUROPEAN PATENT APPLICATION**

(21) Application number: 85300728.4

(22) Date of filing: 04.02.85

(51) Int. Cl.⁴: **H 04 H 1/02**
**H 04 L 9/00, H 04 N 7/16**

(30) Priority 07.02.84 GB 8403164

(43) Date of publication of application:
21.08.85 Bulletin 85/34

(84) Designated Contracting States:
BE CH DE FR GB LI NL SE

(71) Applicant COMMUNICATIONS PATENTS LIMITED
Carlton House Lower Regent Street P.O. Box 451
London, SW1Y 4LS(GB)

(72) Inventor: Baker, Henry Louis
54A Joel Street
Northwood Middlesex, HA6 1PA(GB)

(74) Representative: Mock, Hans et al,
WHEATLEY & MACKENZIE Scottish Life House Bridge
Street
Manchester M3 3DP(GB)

(54) Broadcasting system.

(57) A multi-channel broadcasting system in which en-
crypted data signals are transmitted in either or both
directions between a central terminal and any one of a
number of subscriber terminals. When a subscriber selects a
secure channel dedicated to the transmission of encrypted
data, the terminal is temporarily connected to a further
channel dedicated to the transmission of encryption and/or
decryption information signals. The transmitted encryption
and decryption information signals are stored and used to
encrypt and decrypt the data signal to be transmitted after
the terminal is switched back to the selected secure channel.
The stored encryption and decryption information signals
are subsequently cancelled.

EP 0 152 251 A2

Croydon Printing Company Ltd

## BROADCASTING SYSTEM

The present invention relates to a broadcasting system.

Broadcasting systems are well known in which television and other signals are distributed from a head end to a large number of subscriber terminals via a network of conductive cables and/or optic fibres. Such systems can take a variety of forms but fall into two general categories, that is star switched networks in which each terminal is connected by its own transmission line to a signal switching centre which in turn is connected to the head end by trunk cables, and tree and branch networks in which each terminal is connected to a trunk line and signal switching is effected at the terminal. It is desirable for all systems to be capable of carrying data in both directions between the head end and individual terminals in addition to carrying television signals to the terminals from the head end. In general star networks are more versatile as the capacity of such systems is less limited than that of tree and branch networks.

It has been proposed to use broadcasting systems to transmit data for conducting various transactions. In many cases, for example banking transactions, it is essential that information transmitted over the system is not available to any terminal other than those through which the transaction is being conducted. One way to achieve this end is to provide each terminal with a unique enciphering/deciphering code. When these codes are predetermined and remain unaltered for any length of time there is always a risk that the codes will become known to persons with knowledge of the system and if this occurs confidentiality cannot be ensured.

It is an object of the present invention to provide an improved broadcasting system in which transmitted enciphering/deciphering codes are not generally available to subscribers and can be changed each time a transaction is carried out or whenever security demands.

According to the present invention, there is provided a broadcasting system comprising a head end, a plurality of subscriber terminals, a signal distribution network for transmitting signals on a plurality of channels between the head end and the subscriber terminals, a channel selector switch in respect of each terminal controllable by the subscriber to select the channel on which it is desired to receive signals, and means for encrypting data signals and transmitting the encrypted data signals over at least one channel of the network, the data signal encrypting and transmitting means comprising means remote from the subscriber terminals for generating at least one set of encryption and decryption information signals to be used in encrypting and decrypting the data signals to be transmitted over the one channel, means for transmitting either the encryption or the decryption information signals of said one set on a predetermined other channel to the one terminal, the predetermined other channel not being accessible to any terminal by operation of the terminal selector switch by the subscriber, means for controlling the terminal selector switch of the one terminal temporarily to select the predetermined other channel and then switch back to the one channel, whereby the transmitted encryption or decryption information signals are received by the one terminal only, means for storing the encryption and decryption information signals at the source and destination respectively of the data signal to be transmitted, and means for encrypting the data signal at the source using the stored encryption information signal, transmitting the encrypted data signal to the destination over the one channel, and decrypting the encrypted data signal at the destination using the stored decryption information signal.

Where data signals are to be transmitted to the subscriber terminal, the decryption information signals are transmitted to the terminal. The data may be transmitted in encrypted teletext form for reception by a teletext receiver. Where data signals are to be transmitted from the terminal, the encryption information signals are transmitted to the terminal. The encryption and decryption information signals may be in the form of algorithms and a key or keys. It is of course also possible to have a system in which encrypted data signals are transmitted both to and from the terminal, in which case the appropriate sets of encryption and decryption information signals are provided for transmissions in both directions.

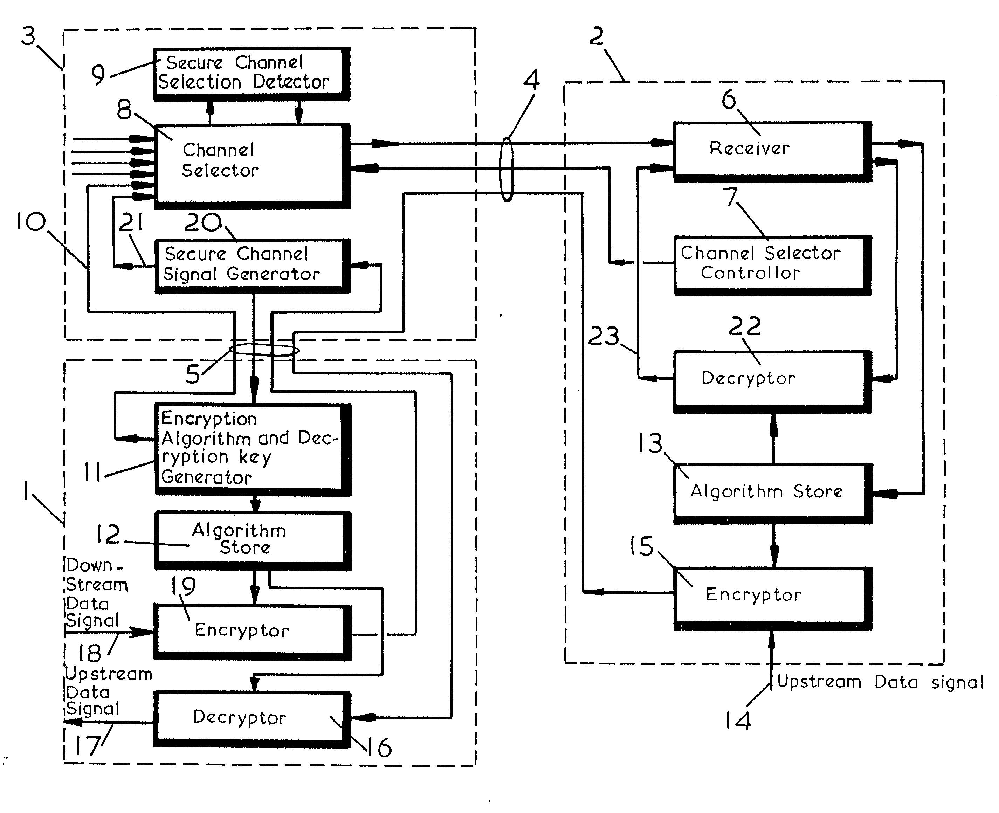

Embodiments of the present invention will now be described, by way of example, with reference to the accompanying drawing.

The drawing is a schematic representation of the elements provided in a system according to the invention for transmitting encrypted data between a central terminal 1 of a bank or other organisation with which subscribers wish to communicate and one subscriber terminal 2, communication being effected via a head end 3.

The network linking the head end 3 and terminal 2 is represented by three lines 4 for conveying information between various components of the system. In actual systems however, all of the signals passing over the network between the head end and the terminal could be transmitted over a single signal path or channel, and components shown in the head end and terminal may be located wholly or in part in intermediate switching centres. Components of the system not relevant to an appreciation of the invention are omitted, but the illustrated system is intended for integration into a star network of the type described in our published European Patent Specification No. 0 094 794 to which reference should be made for further details.

The central terminal 1 and head end 3 may be located on the same premises but generally this will not be the case. For example, the central terminal 1 may be located in the computer department of a bank which may be a considerable distance from the head end. The network linking the head end 3 and the central terminal 1 is represented by four lines 5 but it will be appreciated that any convenient communications link may be provided in practice.

As shown in the drawing, the terminal 2 comprises a receiver 6 for receiving programme signals from the system, and a channel selector controller 7 which transmits signals over the system to control a channel selector 8 at the head end. The selector 8 selects the desired channel and the associated signals are transmitted back to the receiver 6.

When the subscriber selects a "secure" channel which is dedicated to the transmission of confidential information to and from the central terminal 1, the selection of the secure channel is detected by detector 9 at the head end. The detector 9 switches the selector 8 temporarily to select the signals on its input 10, and enables an encryption and decryption algorithm and key generator 11 to load encryption and decryption algorithms and keys into store 12 and to apply encryption and decryption algorithms and keys to the channel selector input 10. The encryption and decryption algorithms and keys applied to input 10 are transmitted to the terminal 2 and loaded from the receiver 6 into a store 13.

When the algorithms and keys has been transmitted the selector 8 is rapidly switched back under the control of the system to the desired secure channel and the subscriber generates a data signal for transmission upstream to the central terminal 1 via the head end 3. The upstream data signal may represent for example an account number and a request for a statement relating to that account. The upstream data signal is applied via line 14 to an encryptor 15 which encrypts the signal using the encryption algorithm and key in store 13. The encrypted signal is then transmitted to a decryptor 16 at the central terminal 1 which decrypts the received signal using the decryption algorithm and key in store 12 and reproduces the original upstream data signal on line 17.

The upstream data signal on line 17 which represents a request for a statement on a particular bank account is supplied to appropriate processing equipment, e.g. the central computer of the bank (not shown), and the requested data is returned to the central terminal 1 in the form of a downstream data signal applied to line 18. The downstream data signal is applied to an encryptor, encrypted in accordance with the encryption algorithm and key in store 12, and applied to a secure channel signal generator 20. This produces an output on line 21 in the form of a picture signal appropriate to the bank concerned onto which information represented by the downstream data signal is to be superimposed. The signals on line 21 are applied to the secure channel to which the selector 8 has been switched and are thus transmitted to the receiver 6.

The receiver 6 displays the received picture signal. The encrypted downstream data signal is transferred from the receiver 6 to a decryptor 22. The downstream data signal is then decrypted on the basis of the algorithm and key in store 13 and produces a signal in line 23 effective to superimpose the data represented by the downstream data signal on the picture being displayed by the receiver 6. Thus two-way secure data communication is achieved, enabling the subscriber to obtain information from the bank computer. In the same way data can be exchanged between the subscriber and the bank's computer to effect financial transactions.

At the end of a transaction, when the subscriber selects a different channel the algorithms and keys can be deleted from the stores 12 and 13 automatically. Alternatively the algorithms and keys can be simply replaced by freshly generated algorithms the next time that a secure channel is selected.

It will be appreciated that although the described system is concerned with transmitting encrypted data both upstream and downstream, the same procedures could be easily adapted to the transmission of encrypted data in only one direction.

As described in the above mentioned European Patent Specification, it is known to transmit data to subscriber terminals in the form of teletext messages. The present invention enables the encryption and decryption of such messages so that only the intended recipient can read them. As with the system of the drawing this can be achieved by transmitting decryption information over a predetermined channel to which the particular terminal is temporarily connected.

For example, a subscriber terminal equipped with a fully implemented Level 1 teletext decoder is temporarily switched from the head end to receive signals from the channel dedicated to the transmission of decryption information. A packet 8/30 message is then transmitted over this channel so that the terminal receiver displays a decryption key code. The subscriber then enters this key into the local decryption store manually. Alternatively, if the teletext decoder were connected directly to the decryption store the key could be inserted directly into the store without the subscriber's intervention.

As a further example, a subscriber terminal having a Level 3 decoder is temporarily switched from the head end to receive signals from the dedicated decryption information channel which conveys a Dynamically Re-definable Character Set (DRCS) into the decoder for subsequent use to decrypt teletext messages received on a manually selected channel.

As a final example, a subscriber terminal having a Level 4 decoder or a telesoftware adaptor coupled to a computer is temporarily switched from the head end to receive signals from the dedicated decryption information channel. A decryption algorithm and key is then downloaded from the head end into the computer. The computer then decrypts teletext data received on the manually selected channel.

The above description assumes a knowledge of conventional teletext systems. Such knowledge can be obtained by reference to the following publication, the content of which is incorporated herein by reference:

Recommendations and Reports of the C.C.I.R.

- 8 -

0152251

1982, Vol. XI, Part 1, Report No. 957.

World System Teletext Technical Specification, published by The Information Technology Division, Room 625, Department of Trade and Industry, London.

0152251

- 9 -

CLAIMS:

1. A broadcasting system comprising a head end, a plurality of subscriber terminals, a signal distribution network for transmitting signals on a plurality of channels between the head end and the subscriber terminals, a channel selector switch in respect of each terminal controllable by the subscriber to select the channel on which it is desired to receive signals, and means for encrypting data signals and transmitting the encrypted data signals over at least one channel of the network, the data signal encrypting and transmitting means comprising means remote from the subscriber terminals for generating at least one set of encryption and decryption information signals to be used in encrypting and decrypting the data signals to be transmitted over the one channel, means for transmitting either the encryption or the decryption information signals of said one set on a predetermined other channel to the one terminal, the predetermined other channel not being accessible to any terminal by operation of the terminal selector switch by the subscriber, means for controlling the terminal selector switch of the one terminal temporarily to select the predetermined other channel and then switch back to the one channel, whereby the transmitted encryption or decryption information signals are received by the one terminal only, means for storing the encryption and decryption information signals at the source and destination respectively of the data signal to be transmitted, and means for encrypting the data signal at the source using the stored encryption information signals, transmitting the encrypted data signal to the destination over the one channel, and decrypting the encrypted data signal

0152251

- 10 -

at the destination using the stored decryption information signals.

2. A broadcasting system according to claim 1, comprising means for cancelling the stored encryption and decryption information signals after the data signals have been transmitted and decrypted.

3. A broadcasting system according to claim 1 or 2, wherein encrypted data signals are to be transmitted upstream to the head end from the subscriber terminals, the set of encryption and decryption information signals comprising an encryption algorithm and key or keys and a decryption algorithm and key or keys, and the encryption algorithm and key or keys being transmitted to the one subscriber terminal.

4. A broadcasting system according to claim 1, 2 or 3, wherein encrypted data signals are to be transmitted downstream from the head end to the subscriber terminal, the set of encryption and decryption information signals comprising an encryption algorithm and key or keys and a decryption algorithm and key or keys, and the decryption algorithm and key or keys being transmitted to the one subscriber terminal.

5. A broadcasting system according to claim 4, wherein the encrypted data signals transmitted downstream are in the form of an encrypted teletext signal.

0152251